# FASCICULE DE BREVET EUROPEEN

(11) **EP 2 043 824 B1**
(45) Date de publication et mention de la délivrance du brevet: **18.11.2009**
(21) Numéro de dépôt: 07823310.3
(22) Date de dépôt: 20.07.2007
(51) Int. Cl.: B25J 15/04

(54) **DISPOSITIF D'ASSEMBLAGE RAPIDE D'OUTILLAGE SUR SUPPORT**
VORRICHTUNG ZUR SCHNELLEN MONTAGE VON WERKZEUGEN AUF EINEM TRÄGER
DEVICE FOR FAST ASSEMBLY OF TOOLS ON A SUPPORT

(30) Priorité: 21.07.2006 FR 0606650
(43) Date de publication de la demande: 08.04.2009
(73) Titulaire: Sidel Participations, 76930 Octeville Sur Mer (FR)
(72) Inventeur: TUAUDEN, Philippe, 76930 Octeville sur Mer (FR); GERMAIN, Dominique, 76930 Octeville sur Mer (FR); DEVAUX, Eric, 76930 Octeville sur Mer (FR)
(74) Mandataire: Cabinet Plasseraud
(86) Numéro de dépôt international: PCT/FR2007/001248
(87) Numéro de publication internationale: WO 2008/009828

(56) Documents cités:
- DD-A1- 226 826
- DD-A1- 239 755
- DD-A1- 239 756
- JP-A- 2005 131 718

## Description

La présente invention concerne un dispositif d'assemblage rapide d'outillage du genre poussoir, pinces ou autres, sur leur support.

Ces outillages, ou outils tout simplement, peuvent se rencontrer sur des machines diverses comme, par exemple, des machines utilisées pour réaliser le déplacement d'objets du genre caisses, bouteilles, flacons, ... etc., et ils sont associés à un support qui peut être constitué d'un bras de transfert, s'il s'agit d'un simple poussoir de caisses, ou d'une tête de préhension plus ou moins complexe, s'il s'agit de pinces pour la manipulation de flacons, bouteilles ou autres.

Ce type de matériel se rencontre, par exemple, sur les machines d'encaissage de flacons, bouteilles ou autres et il est fréquent de devoir changer d'outillage pour tenir compte des différents formats de produits à encaisser.

Certains outillages, qui sont utilisés pour basculer des emballages du type étuis en carton, se présentent sous la forme de roues en étoile, avec une roue disposée de chaque côté du convoyeur. Là aussi, selon l'installation, le changement d'outillage peut être relativement fréquent, chaque outillage étant adapté à un type d'étui.

Dans les configurations actuelles, l'assemblage de l'outil sur son support s'effectue notamment au moyen de vis pour répondre à des impératifs de résistance mécanique. En effet, les outils ont généralement un porte à faux important lorsqu'ils manipulent, par exemple, des objets relativement grands et lourds tels que des flacons ou des bouteilles.

Le mode d'assemblage le plus utilisé est un assemblage par vis ; c'est un mode d'assemblage efficace et solide mais il n'est pas pratique lorsqu'il est utilisé dans des installations susceptibles de manipuler plusieurs types de caisses et/ou d'emballages dont les formats peuvent varier dans des proportions importantes. En effet, le temps nécessaire pour effectuer un changement d'outillage est relativement long, surtout dans le cas des pinces.

Les contraintes engendrées, d'une part, par les cadences qui sont de plus en plus rapides et, d'autre part, par les efforts toujours plus importants qui s'appliquent sur les outillages en question, ont toujours ruiné et rejeté toute autre forme de montage que celle explicitée précédemment.

Le document DD 226 826 A1 divulgue un dispositif d'assemblage pour montage et démontage rapide d'un outillage conforme au préambule de la revendication 1.

L'objectif de la présente invention est de proposer une configuration d'assemblage qui permet de concilier précision et fiabilité pour des outillages divers et variés, même de taille importante, soumis à des cadences élevées et à des efforts importants comme c'est le cas dans les installations d'encaissage.

L'invention a aussi pour but d'améliorer la souplesse des installations qui peuvent ainsi traiter des formats de flacons, bouteilles, caisses ou emballages relativement différents.

Un autre but est de simplifier ces opérations de changement d'outillage qui peuvent, grâce à l'invention, se faire sans l'aide d'outils du genre clés, pinces ou autres, avec, comme conséquence, une réduction significative du temps nécessaire pour réaliser ledit changement d'outillage.

L'invention concerne donc un dispositif d'assemblage pour montage et démontage rapide d'un outillage, adapté à sa destination, sur le support approprié, lequel dispositif d'assemblage comporte, pour chaque outil, d'une part, au niveau dudit support, un verrou disposé dans un alésage avec un orifice traversant et, au niveau de l'outil proprement dit, une broche qui se loge dans ledit orifice et coopère avec ledit verrou et, d'autre part, au niveau de la jonction de l'outil avec son support, des moyens de centrage et d'immobilisation constitués d'un aménagement du type tenon mortaise, lequel aménagement s'étend perpendiculairement à ladite broche, formant avec cette dernière une structure d'assemblage en forme de T.

Selon une disposition préférentielle de l'invention, les moyens de centrage et d'immobilisation, en forme de tenon-mortaise, ont une section en Vé, lequel Vé s'étend perpendiculairement à la broche d'assemblage, de part et d'autre de cette dernière, sur une longueur qui est de l'ordre de la hauteur de la partie saillante de ladite broche, pour assurer la rigidité de l'assemblage.

Toujours selon une disposition préférentielle de l'invention, l'angle du Vé des moyens d'assemblage en forme de tenon-mortaise est compris entre 40 et 60°, de préférence de l'ordre de 50°.

Selon une autre disposition de l'invention, le verrou se présente sous la forme d'un corps cylindrique dont une extrémité est aménagée en forme de bouton d'actionnement pour désactiver ledit verrou, et dont l'autre extrémité comporte un ressort de rappel pour maintenir ledit verrou en position active de verrouillage, lequel verrou comporte, entre les deux extrémités dudit corps, des moyens d'indexation constitués, par exemple, d'un méplat qui coopère avec une pièce rapportée, laquelle pièce se présente sous la forme d'une baïonnette et sa surface d'extrémité fait office d'appui pour ledit ressort de rappel dudit verrou.

Selon une variante de réalisation, la pièce en forme de baïonnette est conformée avec une languette prise dans sa partie centrale et en particulier dans le prolongement de son aile qui sert à la fixer sur le fourreau, laquelle languette fait office d'organe d'indexation en coopérant avec le méplat aménagé sur le verrou et, en plus, elle fait office de butée pour retenir ledit verrou, coopérant avec un épaulement aménagé à l'extrémité de ce dernier, du côté du ressort, ce qui permet de disposer d'un équipement complet, autonome, apte à se positionner directement sur tous types d'outillages.

Toujours selon une disposition préférentielle de l'invention, le verrou est logé dans un alésage du support qui fait un angle avec la normale de l'axe de l'orifice de la broche, lequel angle s'étend sur une plage allant de 0 à 10°, de préférence 5°, et cet angle est orienté dans un sens qui tend à favoriser une traction sur ladite broche pour serrer l'outil sur son support.

Toujours selon une disposition préférentielle de l'invention, le dispositif d'assemblage est constitué, pour chaque outil, de deux pièces qui s'interposent entre le support et l'outil proprement dit, lesquelles pièces sont assemblées sur ces derniers de façon appropriée et se présentent, pour l'une, sous la forme d'un fourreau qui est solidaire dudit support, lequel fourreau comporte le verrou et l'orifice vertical pour accueillir la broche d'assemblage qui coopère avec ledit verrou, et, pour l'autre, sous la forme d'un bloc, associé à l'outil, lequel bloc comporte ladite broche d'assemblage, et les surfaces adjacentes dudit fourreau et dudit bloc comportent les moyens de centrage et d'assemblage constitués de l'aménagement du type tenon-mortaise qui s'étend perpendiculairement à ladite broche, formant avec cette dernière la structure d'assemblage en forme de T.

Selon une autre disposition de l'invention, la broche d'assemblage est montée de façon à permettre un réglage de sa position sur le bloc support pour pouvoir, en cas de besoin, rattraper le jeu susceptible de s'établir entre ledit bloc support et le fourreau, lequel bloc support comporte un alésage vertical pour le centrage et le guidage de ladite broche d'assemblage, lequel alésage vertical est prolongé par un taraudage, de diamètre inférieur audit alésage, coopérant avec un filetage aménagé à l'extrémité inférieure de ladite broche sur une longueur supérieure à celle dudit taraudage, lequel filetage de ladite broche coopère avec un écrou qui verrouille ladite broche au niveau de la partie inférieure dudit bloc support.

Toujours selon une disposition préférentielle de l'invention, pour un outillage du type roue étoile utilisé pour réaliser le basculement d'emballages du type étuis, le dispositif d'assemblage comprend un fourreau qui est constitué de deux fourreaux disposés bout à bout, tête bêche, symétriquement par rapport à l'axe de ladite roue étoile, pour accueillir deux blocs sur lesquels sont montées des demi-roues étoiles, lesquels blocs sont verrouillés par leur propre broche qui coopère avec le verrou du fourreau correspondant.

Selon une autre disposition de l'invention, pour des outillages du genre pinces, la partie active de ces pinces est garnie d'un patin en matériau du type caoutchouc, lequel patin, de forme parallélépipédique, comporte, sur son dos, au moins un ergot cylindrique susceptible de traverser un orifice aménagé dans ladite pince, lequel ergot est muni d'une surépaisseur faisant office de butée, laquelle surépaisseur se cale sur le dos de ladite pince.

Mais l'invention sera encore détaillée à l'aide de la description suivante et des dessins annexés, donnés à titre indicatif, et dans lesquels :
- la figure 1 montre, de façon schématique, un outil du genre pinces pour la manipulation de flacons, bouteilles ou autres produits du même genre, équipé du dispositif d'assemblage selon l'invention, lequel outil est solidaire des bras porteurs réglables d'une tête de manipulation, non représentée,
- la figure 2 est une vue éclatée de l'un des éléments de l'outil représenté figure 1,
- la figure 3 montre une coupe transversale du dispositif d'assemblage rapide en position inactive, et illustre notamment le verrou dans sa position active, avec la pièce en forme de bloc munie de la broche d'assemblage, laquelle broche est représentée dans une position non emmanchée,
- la figure 4 montre une coupe transversale du dispositif d'assemblage lors du déverrouillage ou lors de l'emmanchement de la pièce en forme de bloc, et de sa broche, dans la pièce en forme de fourreau, le verrou étant maintenu en position inactive par l'opérateur,
- la figure 5 montre également une coupe transversale du dispositif d'assemblage en position active de verrouillage,
- la figure 6 montre une coupe transversale du bloc ainsi que la broche et son écrou de verrouillage, l'ensemble étant représenté désassemblé afin d'illustrer les moyens de réglage de ladite broche dans son bloc,
- la figure 7 montre le fourreau avec un verrou qui fait un angle avec la normale de l'axe de l'orifice de la broche,
- la figure 8 est une vue de côté du verrou de la figure 7, représenté seul,
- la figure 9 est une vue de dessus du verrou représenté figure 8,
- la figure 10 montre une variante de réalisation du verrou et de son montage sur le fourreau,
- la figure 11 représente la pièce en forme de baïonnette, en perspective, qui permet d'indexer la position du verrou et de maintenir ledit verrou solidaire du fourreau,
- la figure 12 montre le verrou seul, tel qu'il se monte dans le fourreau de la figure 10,
- la figure 13 montre le verrou vu de dessus,
- la figure 14 montre un système de roue étoile qui est installé le long d'un convoyeur pour réaliser le basculement d'emballages, du type étuis en carton, à 90°, laquelle roue étoile est vue du côté externe, c'est-à-dire du côté de l'accès au bouton de déverrouillage des demi-roues étoiles,

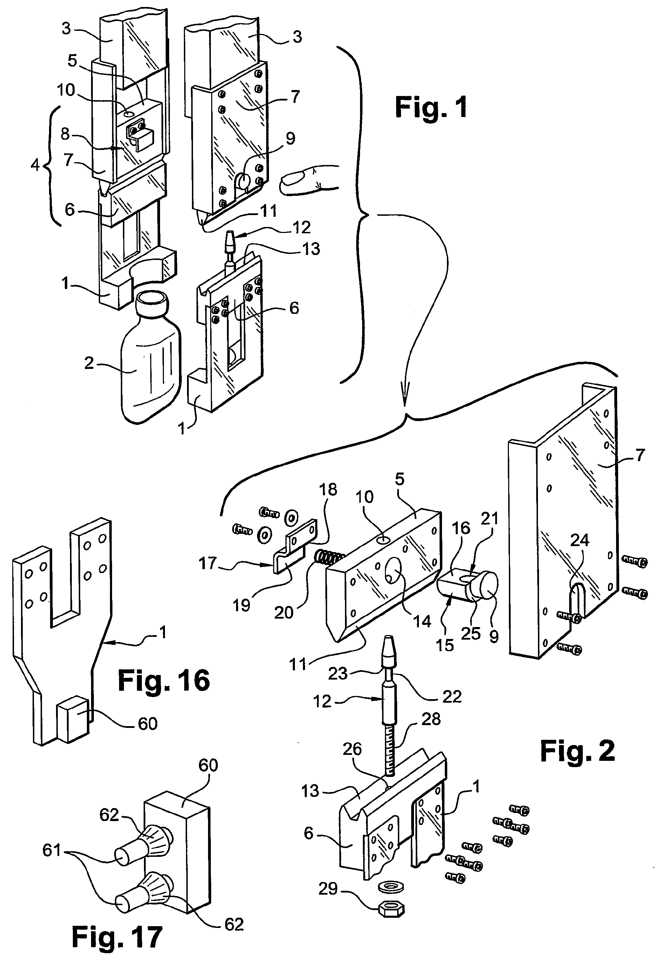

- la figure 1 montre, en perspective, partiellement représenté, le système de roue étoile coopérant avec le dispositif d'assemblage selon l'invention,
- la figure 16 représente, seule et à plus grande échelle que sur la figure 1, une pince munie d'un patin en matériau du type caoutchouc, pour la préhension de produits particuliers comme, par exemple, des tubes relativement souples de crèmes ou autres, et qui sont posés sur le bouchon et manipulés par leur extrémité en forme de queue de carpe,
- la figure 17 montre, en perspective et à une échelle encore plus grande, le patin installé sur la pince représentée figure 16.

L'outil représenté figure 1 comprend une paire de pinces (1) qui sont aménagées pour saisir un flacon (2), par exemple.

Chaque élément de ces pinces (1) est porté par un bras (3) qui est solidaire de la tête de manipulation, non représentée, lesquels bras (3) sont mobiles l'un par rapport à l'autre pour permettre la saisie ou le lâché du flacon (2).

La jonction entre chaque pince (1) et le bras (3) correspondant est réalisée au moyen d'un dispositif (4) d'assemblage rapide.

Ce dispositif (4) d'assemblage rapide est, par exemple, constitué d'une partie fixe solidaire du bras (3) et d'une partie escamotable, interchangeable, qui porte une pince (1).

La partie fixe est dénommée fourreau (5) dans la suite du texte et la partie escamotable est dénommée bloc (6).

Une platine (7) à section en U réalise la jonction entre le fourreau (5) et le bras (3) de la tête de préhension, non représentée. Chaque outil, comme la pince (1), est assemblé par vis ou autre, sur son bloc (6).

Le fourreau (5) comporte un système (8) de verrou et le verrou lui-même, détaillé plus loin, est manoeuvrable au moyen d'un bouton (9) qui apparaît en saillie par rapport à la platine (7), accessible naturellement pour l'opérateur chargé de monter et de démonter chaque élément de pince.

Tel que détaillé figure 2, le dispositif (4) d'assemblage rapide d'outillage est composé : - de la pièce en forme de fourreau (5), solidaire de la platine (7) et, - de la pièce escamotable en forme de bloc (6).

Le fourreau (5) comporte un orifice (10) central vertical et un tenon (11) qui s'étend sur sa face inférieure.

Le bloc (6) comporte - une broche (12) rapportée qui coopère avec l'orifice (10) du fourreau (5) et - une mortaise (13) dont la forme est complémentaire de celle du tenon (11) pour réaliser un emboîtement.

Le centrage et la rigidité de l'assemblage des deux pièces l'une par rapport à l'autre, c'est-à-dire le fourreau (5) et le bloc (6) support, sont réalisés par le montage type tenon (11)-mortaise (13) avec, comme particularité, une section en forme de Vé, dont l'angle par rapport à l'axe du dispositif est de l'ordre de 50°, compris entre 40 et 60°.

Ce Vé s'étend perpendiculairement à la broche (12), de part et d'autre de cette dernière, sur une longueur qui est de l'ordre de la hauteur de la partie saillante de ladite broche (12), pour assurer une bonne rigidité à l'assemblage.

Les moyens d'assemblage précités, à savoir la broche (12) et l'ensemble tenon mortaise, présentent une forme en T qui procure une grande rigidité au dispositif (4) d'assemblage.

Le fourreau (5) comporte également un alésage (14) cylindrique pour accueillir le verrou (15) proprement dit. Cet alésage (14) est perpendiculaire à l'orifice (10) de la broche (12) et son axe coupe celui de cette dernière.

Le verrou (15) se présente sous la forme d'un corps cylindrique qui traverse le fourreau (5). Il comporte un méplat (16) qui permet d'indexer sa position par rapport au fourreau (5), lequel méplat (16) coopère avec une pièce (17) qui est fixée sur la face interne dudit fourreau (5). Cette pièce (17) se présente sous la forme d'une baïonnette et comporte une surface (18) plane horizontale coopérant avec le méplat (16) aménagé sur le verrou (15) ; elle comporte aussi une surface (19) d'extrémité qui est perpendiculaire à l'axe du verrou (15) et qui fait office de butée, à la fois pour ledit verrou (15) et pour un ressort (20) qui maintient ledit verrou (15) en position active de verrouillage.

Ce verrou (15) comporte également un orifice (21) particulier à deux alésages de diamètres différents, dont les axes sont situés dans le même plan, pour le passage et le verrouillage de la broche (12) : - un alésage dont le diamètre est sensiblement supérieur à celui de l'extrémité supérieure de la broche (12) et - un alésage dont le diamètre est nettement inférieur et qui correspond à celui de la gorge (22) aménagée sur ladite broche (12).

La gorge (22), en forme de rétreint, façonne un épaulement (23) qui coopère avec le méplat (16) du verrou pour immobiliser la broche (12).

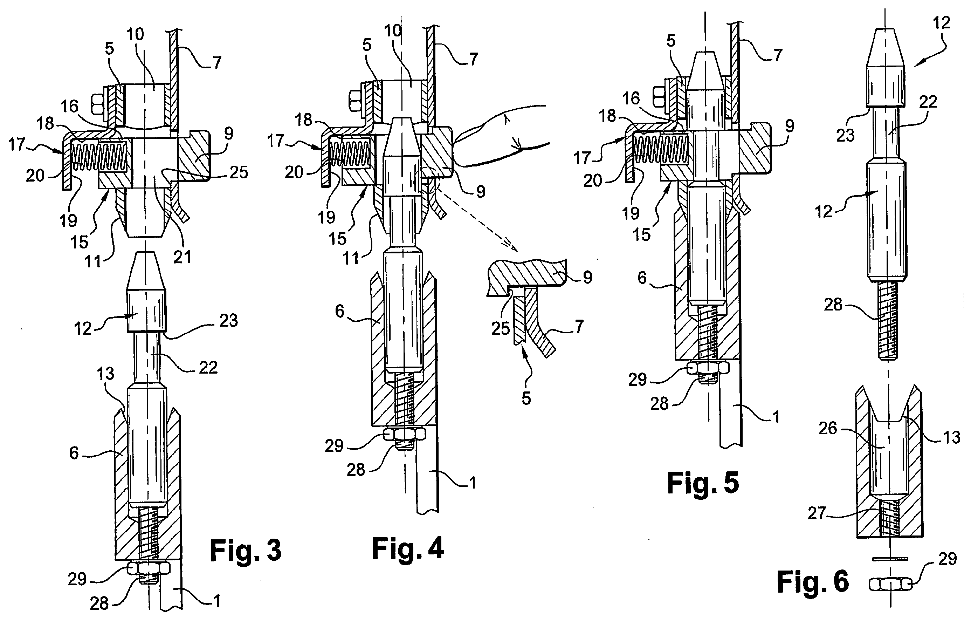

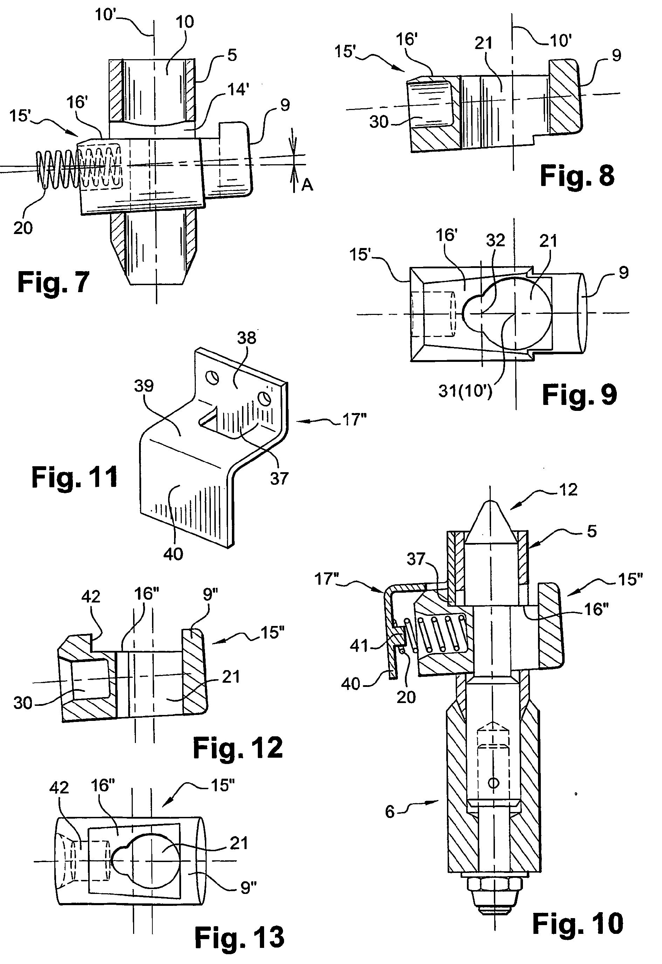

Côté interne, le verrou (15) coopère avec le ressort (20) qui le maintient en position active de verrouillage comme représenté figure 3, lequel ressort (20) est en appui sur la surface (19) d'extrémité verticale de la pièce (17) en forme de baïonnette. Côté externe, le verrou (15) est retenu dans son alésage (14), selon un premier mode de réalisation, par l'intermédiaire de la platine (7) qui comporte un orifice (24) dont le diamètre est inférieur à celui du corps dudit verrou mais sensiblement supérieur à celui du bouton (9) pour permettre son passage et son actionnement par l'opérateur. L'épaulement (25) entre le corps du verrou (15) et le bouton (9) coopère avec la platine (7) pour maintenir ledit verrou dans son logement du fourreau (5). Une variante de réalisation sera présentée plus loin, figures 10 à 13.

En appuyant sur le bouton (9), comme illustré figure 4, l'opérateur provoque un enfoncement du verrou (15) vers la pièce (17) en forme de baïonnette, ce qui a pour effet de libérer la broche (12). Lors de l'opération inverse, l'emmanchement de la broche (12) dans le fourreau (5) est facilité par la présence d'un cône à son extrémité.

Le verrouillage du dispositif (4) d'assemblage est assuré avec le retour en position active du verrou (15) sous l'effet de la pression exercée par le ressort (20) de maintien et en particulier par l'orifice (21) de verrouillage qui coopère avec la gorge (22) pratiquée dans la broche (12), comme représenté figure 5.

Pour faciliter la mise en place du verrou (15) et réduire le jeu de l'assemblage, ledit verrou peut, comme détaillé plus loin figures 7 et 8, être légèrement incliné.

Le jeu de l'assemblage se règle tout d'abord au moyen de la broche (12) qui est montée réglable dans le bloc (6), comme représenté figure 6.

Le bloc (6) comporte un alésage (26) vertical pour loger la broche (12), laquelle broche est montée coulissante dans ledit alésage (26) qui lui sert de guide. Cet alésage (26) est prolongé par un taraudage (27) dont le diamètre est inférieur à celui dudit alésage (26), lequel taraudage (27) coopère avec un filetage (28) aménagé à l'extrémité inférieure de ladite broche (12) et ce filetage (28), dont la longueur est nettement supérieure à celle dudit taraudage (27), déborde sous le bloc (6), permettant le montage d'un écrou (29) qui verrouille le réglage de ladite broche (12) par rapport audit bloc (6).

Le fourreau (5) qui est représenté avec le verrou (15'), figure 7, comporte un alésage (14') dont l'axe fait un angle A de l'ordre de 5° avec la normale de l'axe (10') de l'orifice (10) dans lequel se loge la broche (12), non représentée sur cette figure.

Le plan du méplat (16') qui est aménagé sur le verrou (15') est, quant à lui, perpendiculaire à l'axe (10') de l'orifice (10). Ainsi, lorsque le verrou (15') se déplace vers sa position active de verrouillage, le méplat (16') se déplace légèrement sur l'axe (10') ; il forme une sorte de coin et il exerce une certaine traction sur la broche (12) par l'intermédiaire de l'épaulement (23) de cette dernière.

L'angle A que fait l'axe de l'alésage (14) avec la normale de l'axe (10') de l'orifice (10) peut en fait s'étendre de 0 à 10° environ. Il est relativement faible pour éviter tout phénomène de réversibilité.

La figure 8 montre le verrou (15') de la figure 7. Ce verrou (15') présente un corps, comme précédemment, de forme générale cylindrique. L'une des extrémités comporte le bouton (9) de manipulation et l'autre extrémité comporte le logement (30) pour le ressort (20).

Le méplat (16') fait un angle de l'ordre de 5°, par exemple, avec l'axe du verrou (15') ; il est perpendiculaire à l'axe (10') de l'orifice (10) et à l'axe de l'orifice (21) qui est aménagé dans le verrou pour le passage de la broche (12).

La figure 9 montre, vu de dessus, l'orifice (21) par lequel passe la broche (12), lequel orifice (21) comporte deux axes : l'axe (31) qui correspond à l'orifice permettant l'introduction de la broche (12) et l'axe (32) qui correspond à l'orifice permettant de loger la gorge (22) de ladite broche (12).

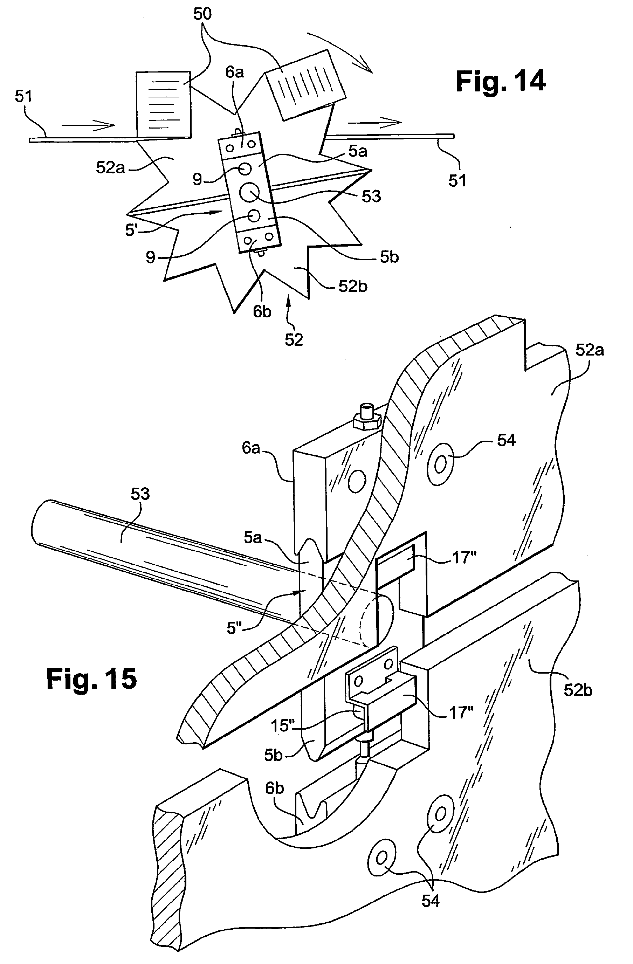

La figure 10 montre une variante de réalisation du dispositif d'assemblage qui permet de disposer d'un ensemble autonome, facilement adaptable sur tous types d'outillages, comme détaillé plus loin en liaison avec les figures 14 et 15.

Ce dispositif d'assemblage comprend un bloc (6) inchangé, muni de sa broche (12) et un fourreau (5) dont le verrou (15") coopère avec une pièce (17") modifiée qui a plusieurs fonctions: - une fonction d'indexation, comme précédemment, et - une fonction globale de maintien dudit verrou (15") par rapport audit fourreau (5).

Cette pièce (17"), en forme de baïonnette, est réalisée à partir d'une plaquette de tôle découpée et pliée; elle comporte, comme représenté figures 10 et 11, un aménagement original qui se présente sous la forme d'une languette (37) obtenue par une découpe en U de la partie centrale de ladite plaquette.

Cette languette (37) se situe dans le prolongement de l'aile (38) de la pièce (17"), c'est-à-dire l'aile qui sert à l'assemblage de cette pièce (17") avec le fourreau (5); elle remplace la surface (18) de la pièce (17) représentée figure 3 à 5 qui servait à l'indexation du verrou (15").

La pièce (17") conserve une aile (39) dans laquelle on trouve la découpe de la languette (37), laquelle aile (39) fait la jonction entre l'aile (38) d'assemblage et l'aile (40) qui sert de surface d'appui pour le ressort (20) et qui sert aussi de butée pour le verrou (15) lorsqu'il est totalement enfoncé.

La surface interne de l'aile (40), qui sert d'appui au ressort (20), peut comporter, comme visible figure (10), un plot (41) de centrage du ressort (20).

Le verrou (15") représenté figures 10, 12 et 13, a, comme précédemment, une forme cylindrique; il comporte un méplat (16") pour son indexation, lequel méplat (16") s'étend entre le bouton (9) de manoeuvre et une butée (42) située du côté du logement (30) du ressort (20) de rappel.

Ce dispositif d'assemblage peut convenir pour de multiples applications et en particulier pour des installations où il est nécessaire de changer les outillages de manipulation de produits, comme les emballages en forme d'étuis représentés figure 14;

L'outillage représenté figure 14 permet de basculer des emballages (50) qui arrivent sur un convoyeur (51) et qui continuent ensuite, après basculement, sur le même convoyeur, vers un poste de regroupage, non représenté, en vue d'une palettisation, par exemple.

Une roue-étoile (52) est installée de chaque côté du convoyeur (51) et chaque roue est constituée de deux parties (52a), (52b), en forme de demi-lune et ces deux parties sont réunies sur un arbre (53) par l'intermédiaire du système d'assemblage.

Ce système d'assemblage présente la particularité de comporter une pièce centrale qui fait office de fourreau (5'), centrée et fixée sur l'arbre (53) de la roue (52), lequel fourreau (5') est en fait constitué de deux fourreaux (5a), (5b), disposés bout à bout et tête bêche.

Chaque fourreau (5a), (5b) accueille un bloc (6a), (6b), respectivement, sur lequel est installé l'outil et en particulier chaque partie (52a), (52b), en forme de demi-lune de la roue étoile (52).

La figure 14 est une vue externe du dispositif d'assemblage, faisant apparaître les boutons (9) qui permettent le déverrouillage des demi-lunes (52a, 52b).

La figure 15, montre, représentées partiellement, les demi-lunes (52a, 52b): la demi-lune (52a) est en place, verrouillée sur l'arbre (53), alors que la demi-lune (52b) est désassemblée de son fourreau (5b).

Chaque demi-lune (52a, 52b) est solidaire d'un bloc (6a, 6b), respectivement, fixée par des moyens appropriés comme les vis (54).

Chaque bloc (6a, 6b) comporte une broche (12), comme détaillé auparavant, et l'ensemble coopère avec le fourreau (5a, 5b) correspondant.

Sur cette figure 15, on remarque les pièces (17") multifonctions qui servent: - à indexer le verrou (15"), - à le maintenir assemblé au fourreau (5') et - à former la surface d'appui de ressort de rappel dudit verrou (15"), lequel ressort n'est pas apparent sur cette figure 15.

Les demi-lunes (52a, 52b) sont réalisées en matériau thermoplastique du genre polyéthylène; elles sont adaptées à chaque type d'emballage (50) à manipuler.

La figure 16 représente un aménagement particulier des pinces (1) de l'outillage de la figure 1. Ces pinces (1) constituent des pièces d'usure qui sont soumises à des cycles de serrage et de frottement.

Elles se présentent sous la forme d'une simple plaque de tôle découpée dont la surface active est revêtue d'un matériau approprié. Mais la surface de contact de ces pinces peut se dégrader assez rapidement et il est intéressant de pouvoir changer facilement cette partie fragile constituant lesdites surfaces de contact, plutôt que de changer l'ensemble de la pince.

L'aménagement proposé, figure 16, consiste en un patin (60) qui est réalisé en matériau du type caoutchouc et ce patin se présente sous la forme d'un parallélépipède qui est disposé simplement au niveau de la partie active des pinces (1).

Ce patin (60) comporte, sur sa face qui est en contact avec la structure de la pince, au moins un ergot (61) de forme cylindrique et cet ergot est muni d'une surépaisseur (62) en forme de tronc de cône qui fait office de butée et d'organe de verrouillage dudit patin sur la pince (1).

Les ergots (61) traversent la tôle de la pince par des orifices appropriés, non apparents, qui ont le diamètre desdits ergots.

En cas d'usure du patin (60) ou en cas de détérioration, ces ergots (61) sont faciles à découper, permettant le remplacement rapide desdits patins.

## Revendications

1. Dispositif d'assemblage pour montage et démontage rapide d'un outillage, adapté à sa destination, sur le support approprié, lequel dispositif d'assemblage comporte, pour chaque outil, d'une part, au niveau dudit support, un verrou (15, 15', 15") disposé dans un alésage (14, 14') avec un orifice (10) traversant et, au niveau de l'outil proprement dit, une broche (12) qui se loge dans ledit orifice (10) traversant et coopère avec ledit verrou et, d'autre part, au niveau de la jonction de l'outil avec son support, des moyens de centrage et d'immobilisation, **caractérisé en ce que** lesdits moyens de centrage et d'immobilisation sont constitués d'un aménagement du type tenon (11)-mortaise (13), lequel aménagement s'étend perpendiculairement à ladite broche (12), formant avec cette dernière une structure d'assemblage en forme de T.

2. Dispositif d'assemblage d'outillage selon la revendication 1, **caractérisé en ce que** les moyens de centrage et d'immobilisation, en forme de tenon (11)-mortaise (13), ont une section en Vé, lequel Vé s'étend perpendiculairement à la broche (12), de part et d'autre de cette dernière, sur une longueur qui est de l'ordre de la hauteur de la partie saillante de ladite broche (12), pour assurer la rigidité de l'assemblage.

3. Dispositif d'assemblage d'outillage selon la revendication 2, **caractérisé en ce que** l'angle du Vé au niveau des moyens de centrage en forme de tenon (11)-mortaise (13) est compris entre 40 et 60°, de préférence de l'ordre de 50°.

4. Dispositif d'assemblage selon l'une quelconque des revendications 1 à 3, **caractérisé en ce que** le verrou (15, 15', 15") se présente sous la forme d'un corps cylindrique dont une extrémité est aménagée en forme de bouton (9) pour désactiver ledit verrou, et dont l'autre extrémité comporte un ressort (20) de rappel pour maintenir ledit verrou en position active de verrouillage, lequel verrou (15, 15', 15") comporte, entre les deux extrémités dudit corps, des moyens d'indexation constitués, par exemple, d'un méplat (16, 16', 16") qui coopère avec une pièce (17, 37) rapportée, laquelle pièce se présente sous la forme d'une baïonnette dont une partie coopère avec ledit méplat et dont l'extrémité sert d'appui pour ledit ressort (20) de rappel dudit verrou (15, 15', 15").

5. Dispositif d'assemblage d'outillage selon la revendication 4, **caractérisé en ce que** la pièce (17"), en forme de baïonnette, est conformée avec une languette (37) prise dans sa partie centrale, laquelle languette (37) fait office d'organe d'indexation en coopérant avec le méplat (16, 16', 16") aménagé sur le verrou (15, 15', 15") et, en plus, elle fait office de butée pour retenir ledit verrou, coopérant avec un épaulement (42) aménagé à l'extrémité de ce dernier, du côté du ressort (20) de rappel.

6. Dispositif d'assemblage selon l'une quelconque des revendications 1 à 5, **caractérisé en ce que** le verrou (15, 15') est logé dans un alésage (14, 14') du support dont l'angle A avec la normale de l'axe (10') de l'orifice (10) de la broche (12) s'étend sur une plage allant de 0 à 10°, de préférence 5°, lequel angle est orienté dans un sens qui tend à tirer sur ladite broche (12) pour serrer l'outil sur son support.

7. Dispositif d'assemblage selon l'une quelconque des revendications 1 à 6, **caractérisé en ce qu'**il est constitué, pour chaque outil, de deux pièces qui s'interposent entre le support et l'outil proprement dit, lesquelles pièces sont assemblées sur ces derniers de façon appropriée et se présentent, - pour l'une, sous la forme d'un fourreau (5, 5') qui comporte le verrou (15, 15', 15") et l'orifice (10) pour accueillir la broche (12) qui coopère avec ledit verrou, et, - pour l'autre, sous la forme d'un bloc (6, 6a, 6b), associé à l'outil, lequel bloc (6, 6a, 6b) comporte ladite broche (12), et les surfaces adjacentes dudit fourreau (5, 5') et dudit bloc (6, 6a, 6b) comportent les moyens de centrage et d'assemblage constitués de l'aménagement du type tenon (11)-mortaise (13) qui s'étend perpendiculairement à ladite broche (12), formant avec cette dernière la structure d'assemblage en forme de T.

8. Dispositif d'assemblage rapide d'outils selon l'une quelconque des revendications 1 à 7, **caractérisé en ce qu'**il comporte une broche (12) qui est montée réglable sur le bloc (6), dans le sens vertical, pour rattraper le jeu entre ledit bloc (6) et le fourreau (5), après le verrouillage de ladite broche (12), lequel bloc (6) comporte un alésage (26) vertical pour le guidage de la broche (12), prolongé d'un taraudage (27) de diamètre inférieur audit alésage (26) vertical, coopérant avec un filetage (28) aménagé à l'extrémité inférieure de ladite broche (12), lequel filetage (28) coopère avec un écrou (29) pour verrouiller ladite broche.

9. Dispositif d'assemblage rapide d'outil, du genre roue étoile (52) utilisé par couple pour faire basculer des emballages (50) en carton ou autre, selon l'une quelconque des revendications 1 à 8, **caractérisé en ce qu'**il comprend un fourreau (5') double, constitué de deux fourreaux (5a, 5b) disposés bout à bout et tête bêche, symétriquement par rapport à l'axe (53) de la roue étoile (52), pour accueillir deux blocs (6a, 6b) sur lesquels sont montées des demi-roues (52a, 52b) étoiles, lesquels blocs (6a, 6b) sont verrouillés par leur propre broche (12) qui coopère avec le verrou (15, 15', 15") du fourreau (5a, 5b) correspondant.

10. Dispositif d'assemblage rapide d'outils selon l'une quelconque des revendications 1 à 9, **caractérisé en ce qu'**il comporte, pour des outillages du genre pinces, sur la partie active de ces pinces (1), un patin (60) en matériau du type caoutchouc, lequel patin, de forme parallélépipédique, comporte, sur son dos, au moins un ergot (61) cylindrique susceptible de traverser un orifice aménagé dans ladite pince, lequel ergot (61) est muni d'une surépaisseur (62) faisant office de butée qui se cale sur le dos de ladite pince.

## Claims

1. An assembly device for fast installation and removal of a tool, suitable for its destination, on/from the appropriate support, which assembly device comprises, for each tool, on the one hand, at said support, a bolt (15, 15', 15") placed in a bore (14, 14') with a through hole (10) and, at the actual tool, a mandrel (12) which is housed in said through hole (10) and interacts with said bolt and, on the other hand, at the junction between the tool and its support, centering and immobilization means, **characterized in that** said centering and immobilization means consist in an arrangement of the mortice (13)-tenon (11) type, which arrangement extends perpendicularly to said mandrel (12), forming with the latter a T-shaped assembly structure.

2. The tool assembly device as claimed in claim 1, **characterized in that** the centering and immobilization means, in mortice (13)-tenon (11) form, have a V section, which V extends perpendicularly to the mandrel (12), on either side of the latter, over a length which is of the order of the height of the protruding portion of said mandrel (12), in order to ensure the rigidity of the assembly.

3. The tool assembly device as claimed in claim 2, **characterized in that** the angle of the V at the centering means in mortice (13)-tenon (11) form is between 40 and 60°, preferably of the order of 50°.

4. The assembly device as claimed in any one of claims 1 to 3, **characterized in that** the bolt (15, 15', 15") is in the form of a cylindrical body one end of which is arranged in the form of a button (9) to deactivate said bolt, and the other end of which comprises a return spring (20) to keep said bolt in the active locking position, which bolt (15, 15', 15") comprises, between the two ends of said body, indexing means consisting, for example, of a flat (16, 16', 16") which interacts with a fitted part (17, 37), which part is in the shape of a bayonet a part of which interacts with said flat and the end of which serves as a bearing surface for said return spring (20) of said bolt (15, 15', 15").

5. The tool assembly device as claimed in claim 4, **characterized in that** the part (17"), in the shape of a bayonet, is formed with a tab (37) taken from its central portion, which tab (37) serves as an indexing member by interacting with the flat (16, 16', 16") arranged on the bolt (15, 15', 15") and, in addition, it serves as an abutment to retain said bolt, interacting with a shoulder (42) arranged at the end of the latter, on the side of the return spring (20).

6. The assembly device as claimed in any one of claims 1 to 5, **characterized in that** the bolt (15, 15') is housed in a bore (14, 14') of the support of which the angle A with the normal line of the axis (10') of the hole (10') of the bolt (12) extends over a range from 0 to 10°, preferably 5°, which angle is oriented in a direction which tends to pull on said mandrel (12) to clamp the tool onto its support.

7. The assembly device as claimed in any one of claims 1 to 6, **characterized in that** it consists, for each tool, of two parts which are interposed between the support and the tool itself, which parts are assembled to the latter in an appropriate manner and are, for one of them, in the form of a sheath (5, 5') which comprises the bolt (15, 15', 15") and the hole (10) to accommodate the mandrel (12) which interacts with said bolt, and, for the other of them, in the form of a block (6, 6a, 6b), associated with the tool, which block (6, 6a, 6b) comprises said mandrel (12), and the adjacent surfaces of said sheath (5, 5') and of said block (6, 6a, 6b) comprise the centering and assembly means consisting of the arrangement of the mortice (13)-tenon (11) type which extends perpendicularly to said mandrel (12), forming with the latter the T-shaped assembly structure.

8. The fast tool assembly device as claimed in any one of claims 1 to 7, **characterized in that** it comprises a mandrel (12) which is mounted to be adjustable on the block (6), in the vertical direction, to take up the play between said block (6) and the sheath (5), after the locking of said mandrel (12), which block (6) comprises a vertical bore (26) for the guidance of the mandrel (12), extended by a tapping (27) with a diameter smaller than said vertical bore (26), interacting with a thread (28) arranged at the bottom end of said mandrel (12), which thread (28) interacts with a nut (29) to lock said mandrel.

9. The fast tool assembly device, of the starwheel (52) kind used by torque to tip packages (50) made of cardboard or other material, as claimed in any one of claims 1 to 8, **characterized in that** it comprises a double sheath (5'), consisting of two sheaths (5a, 5b) placed end-to-end and head-to-toe, symmetrically relative to the axis (53) of the starwheel (52), in order to accommodate two blocks (6a, 6b) on which half-starwheels (52a, 52b) are mounted, which blocks (6a, 6b) are locked by their own mandrel (12) which interacts with the bolt (15, 15', 15") of the corresponding sheath (5a, 5b).

10. The fast tool assembly device as claimed in any one of claims 1 to 9, **characterized in that** it comprises, for tools of the clamp type, on the active portion of these clamps (1), a skid (60) made of material of the rubber type, which skid, of parallelepipedal shape, comprises, on its back, at least one cylindrical spigot (61) capable of passing through a hole arranged in said clamp, which spigot (61) is furnished with an extra thickness (62) serving as an abutment which stops on the back of said clamp.

## Patentansprüche

1. Montagevorrichtung für die schnelle Montage und Demontage von an ihren Verwendungszweck angepassten Werkzeugen an der entsprechenden Halterung, wobei die Montagevorrichtung für jedes Werkzeug einerseits auf Niveau der Halterung einen Verschluss (15, 15', 15''), der in einer Bohrung (14, 14') mit einer durchgehenden Öffnung (10) angeordnet ist, und auf Niveau des eigentlichen Werkzeugs einen Dorn (12), der sich in der durchgehenden Öffnung (10) befindet und mit dem Verschluss zusammenwirkt, und andererseits auf Niveau der Verbindung des Werkzeugs und seiner Halterung Zentrier- und Feststellmittel aufweist, **dadurch gekennzeichnet, dass** die Zentrier- und Feststellmittel aus einer Nut (13) - Feder (11) - Anordnung bestehen, wobei sich die Anordnung senkrecht zum Dorn (12) erstreckt und mit letzterem eine T-förmige Montagestruktur bildet.

2. Werkzeugmontagevorrichtung nach Anspruch 1, **dadurch gekennzeichnet, dass** die Zentrier- und Feststellmittel in Form von Nut (13) und Feder (11) einen V-förmigen Querschnitt aufweisen, wobei sich das V auf beiden Seiten des Dorns (12) über eine Länge in der Größenordnung der Höhe des vorstehenden Abschnitts des Dorns (12) senkrecht zu letzterem erstreckt, um die Steifigkeit der Montage zu gewährleisten.

3. Werkzeugmontagevorrichtung nach Anspruch 2, **dadurch gekennzeichnet, dass** der Winkel des V im Bereich der Zentriermittel in Form von Nut (13) und Feder (11) zwischen 40 und 60 ° beträgt, vorzugsweise um 50 °.

4. Montagevorrichtung nach einem der Ansprüche 1 bis 3, **dadurch gekennzeichnet, dass** der Verschluss (15, 15', 15") in Form eines zylindrischen Körpers vorliegt, von dem ein Ende in Form eines Knopfs (9) gestaltet ist, um den Verschluss zu deaktivieren, und dessen anderes Ende eine Rückstellfeder (20) aufweist, um den Verschluss in der aktiven Verschlussstellung zu halten, wobei der Verschluss (15, 15', 15'') zwischen den beiden Enden des Körpers Einstellmittel aufweist, die beispielsweise aus einer Abflachung (16, 16', 16'') bestehen, die mit einem angesetzten Teil (17, 37) zusammenwirkt, wobei das Teil als Bajonett geformt ist, von dem ein Abschnitt mit der Abflachung zusammenwirkt und dessen Ende als Abstützung für die Rückstellfeder (20) des Verschlusses (15, 15', 15'') dient.

5. Werkzeugmontagevorrichtung nach Anspruch 4, **dadurch gekennzeichnet, dass** das Teil (17'') in Form eines Bajonetts in seinem mittigen Abschnitt mit einer Lasche (37) versehen ist, wobei die Lasche (37) als Einstellelement dient, indem sie mit der Abflachung (16, 16', 16") auf dem Verschluss (15, 15', 15") zusammenwirkt, und weiterhin als Anschlag zum Halten des Verschlusses dient, indem sie mit einem Ansatz (42) am Ende des letzteren auf der Seite der Rückstellfeder (20) zusammenwirkt .

6. Montagevorrichtung nach einem der Ansprüche 1 bis 5, **dadurch gekennzeichnet, dass** sich der Verschluss (15, 15') in einer Bohrung (14, 14') der Halterung befindet, deren Winkel A zur Senkrechten der Achse (10') der Öffnung (10) des Dorns (12) über einen Bereich von 0 bis 10 °, vorzugsweise 5 °, reich, wobei der Winkel in einer Richtung ausgerichtet ist, dass am Dorn (12) gezogen wird, um das Werkzeug an seine Halterung zu pressen.

7. Montagevorrichtung nach einem der Ansprüche 1 bis 6, **dadurch gekennzeichnet, dass** sie für jedes Werkzeug aus zwei Teilen besteht, die sich zwischen der Halterung und dem eigentlichen Werkzeug befinden, wobei diese Teile auf geeignete Weise an letzteren montiert sind und - einerseits als Umhüllung (5, 5'), die den Verschluss (15, 15', 15'') und die Öffnung (10) zum Aufnehmen des Dorns (12) umfasst, der mit dem Verschluss zusammenwirkt, - und andererseits als ein mit dem Werkzeug verbundener Block (6, 6a, 6b) geformt sind, wobei der Block (6, 6a, 6b) den Dorn (12) umfasst und die aneinander angrenzenden Flächen der Umhüllung (5, 5') und des Blocks (6, 6a, 6b) die Zentrier- und Montagemittel aufweisen, die aus der Nut (13) - Feder (11) - Anordnung bestehen, die sich senkrecht zum Dorn (12) erstreckt und mit letzterem die T-förmige Montagestruktur bildet.

8. Werkzeugschnellmontagevorrichtung nach einem der Ansprüche 1 bis 7, **dadurch gekennzeichnet, dass** sie einen Dorn (12) aufweist, der in senkrechter Richtung verstellbar am Block (6) angebracht ist, um das Spiel zwischen dem Block (6) und der Umhüllung (5) nach dem Verschließen des Dorns (12) nachzustellen, wobei der Block (6) eine senkrechte Bohrung (26) zum Führen des Dorns (12) aufweist, die mit einem Innengewinde (27) mit einem geringeren Durchmesser als dem der senkrechten Bohrung (26) verlängert ist, das mit einem Außengewinde (28) am unteren Ende des Dorns (12) zusammenwirkt, wobei das Außengewinde (28) mit einer Mutter (29) zusammenwirkt, um den Dorn zu sichern.

9. Werkzeugschnellmontagevorrichtung vom Typ Sternrad (52), die paarweise verwendet wird, um Verpackungen (50) aus Pappe oder Ähnliches umzukippen, nach einem der Ansprüche 1 bis 8, **dadurch gekennzeichnet, dass** sie eine doppelte Umhüllung (5') umfasst, die aus zwei Umhüllungen (5a, 5b) besteht, die symmetrisch zur Achse (53) des Sternrads (52) Kopf an Kopf entgegengesetzt gelegen sind, um zwei Blöcke (6a, 6b) aufzunehmen, an denen die Sternradhälften (52a, 52b) angebracht sind, wobei die Blöcke (6a, 6b) mit ihrem eigenen Dorn (12) gesichert werden, der mit dem Verschluss (15, 15', 15'') der entsprechenden Umhüllung (5a, 5b) zusammenwirkt.

10. Werkzeugschnellmontagevorrichtung nach einem der Ansprüche 1 bis 9, **dadurch gekennzeichnet, dass** sie für Greiferwerkzeuge am Wirkteil dieser Greifer (1) ein Klötzchen (60) aus gummiartigem Material aufweist, wobei das Klötzchen in Form eines Quaders auf der Rückseite mindestens einen zylindrischen Stift (61) aufweist, der durch eine Öffnung im Greifer gesteckt werden kann, wobei der Stift (61) mit einer Verdickung (62) versehen ist, die als Anschlag dient und an der Rückseite des Greifers anliegt.
